# EUROPEAN PATENT APPLICATION

(11) **EP 4 578 538 A2**
(43) Date of publication of application: **02.07.2025**
(21) Application number: 24218528.8
(22) Date of filing: 10.12.2024
(51) Int. Cl.: B01F 23/232, B01F 23/454, B01F 25/21, B01F 25/32, B33Y 80/00

(54) **GAS-LIQUID INJECTION APPARATUS**

(30) Priority: 26.12.2023 CN 202311813593
(71) Applicant: L'AIR LIQUIDE, SOCIETE ANONYME POUR L'ETUDE ET L'EXPLOITATION DES PROCEDES GEORGES CLAUDE, 75007 Paris (FR)
(72) Inventor: VAN KAMPEN, Peter, SHANGHAI, 201108 (CN); SHI, Chunqiong, SHANGHAI, 201108 (CN)
(74) Representative: Air Liquide

(57) **Abstract**

Gas-liquid injection apparatus, comprising a body, and a liquid passage, a bypass passage, a gas inlet, a gas-liquid mixing cavity and a gas-liquid mixing passage that are inside the body, wherein the body comprises an inlet end face and an outlet end face, and the liquid passage includes a liquid inlet that opens onto the inlet end face and a passage outlet that is arranged on the outlet end face, and includes a converging section and a throat section that are arranged in sequence downstream of the liquid inlet; one end of the bypass passage opens to the converging section, and the other end is connected to the gas-liquid mixing cavity, and the bypass passage allows liquid flowing in the liquid passage to bypass to the gas-liquid mixing cavity; the gas-liquid mixing cavity is located at the periphery of the liquid passage; the gas inlet opens onto the inlet end face, and is located below the liquid inlet; the gas-liquid mixing cavity and the gas-liquid mixing passage are arranged in sequence downstream of the gas inlet; gas flowing into the gas inlet enters the gas-liquid mixing cavity and mixes with liquid in the gas-liquid mixing cavity, forming a gas-liquid mixed stream, and the gas-liquid mixed stream then flows out of the gas-liquid mixing passage; and the gas-liquid mixing passage is located below the liquid passage.

## Description

### Technical Field

The present invention relates to an apparatus that increases gas-liquid mass transfer in a liquid, and a method for preparing this apparatus, and specifically relates to a gas-liquid injection apparatus and a preparation method for preparing this gas-liquid injection apparatus.

### Background Art

Contact between the gas phase and liquid phase is a key step in many biological and chemical processes. For example, in processes such as wastewater oxidation and aquaculture, oxygen that is dissolved in water continuously depletes, and therefore it is necessary to supplement a body of water with oxygen to maintain the efficient running of the above processes. With increased contact between oxygen gas and water, and sufficient gas-liquid mass transfer, it is more beneficial to oxidation reactions or aquaculture. Devices that increase gas phase and liquid phase mass transfer efficiency have always been a target of research in industry.

CN109475828B discloses a nanobubble generation nozzle and a nanobubble generation apparatus, comprising a guide-in part, an injection part, and a nanobubble generation structure part that is located between the guide-in part and the injection part; bubbles are repeatedly pressurised and released using a principle of a pressurisation dissolution method, so as to injection fine bubbles.

CN113307352B discloses an apparatus and method that enhance sulphur-containing wastewater oxidation, the apparatus comprising a gas-liquid injection unit that is arranged at a bottom end in an oxidation reactor, the gas-liquid injection unit comprising one or more stages of distribution pipes, the distribution pipes comprising a liquid phase annular distribution pipe, a gas phase annular distribution pipe and multiple gas-liquid mixing nozzles, used for generating groups of minute bubbles at the bottom of the reactor, increasing a gas-liquid mass transfer area.

The prior art normally increases gas-liquid dual-phase mass transfer by reducing the volume of bubbles, and the structure of the apparatus is complicated with many parts, only suited to conventional modes of construction and installation.

In view of this, how to design a new gas-liquid injection apparatus, which increases contact between the gas phase and liquid phase in different ways, with the apparatus itself simultaneously having characteristics of being easy to manufacture and low in cost, is an issue in urgent need of solution from those skilled in the art.

### Summary of the Invention

An object of the present invention is to improve the method in the prior art of only using reduced bubble volume to increase gas-liquid mass transfer, and avoid an injection apparatus with a complicated structure, difficult preparation and high cost, by providing a gas-liquid injection apparatus that has a low cost and can be integrally formed using 3D printing, extending gas-liquid contact time, and achieving a good gas-liquid mass transfer effect.

In one aspect, the present invention provides a gas-liquid injection apparatus, used for injecting at least one type of gas and at least one type of liquid into a liquid state environment, the apparatus comprises a body, and the body being internally provided with a liquid passage, a bypass passage, a gas inlet, a gas-liquid mixing cavity and a gas-liquid mixing passage, wherein: the body comprises an inlet end face and an outlet end face, and the inlet end face and the outlet end face are not coplanar.

The liquid passage includes a liquid inlet that opens onto the inlet end face and a passage outlet that is arranged on the outlet end face, and comprises a converging section and a throat section that are arranged in sequence downstream of the liquid inlet; one end of the bypass passage opens to the converging section, and the other end is connected to the gas-liquid mixing cavity, and the bypass passage allows liquid flowing in the liquid passage to bypass to the gas-liquid mixing cavity; the gas-liquid mixing cavity is located at the periphery of the liquid passage; the gas inlet opens onto the inlet end face, and is located below the liquid inlet; the gas-liquid mixing cavity and the gas-liquid mixing passage are arranged in sequence downstream of the gas inlet; gas flowing into the gas inlet enters the gas-liquid mixing cavity and mixes with liquid in the gas-liquid mixing cavity, forming a gas-liquid mixed stream, and the gas-liquid mixed stream flows out of the gas-liquid mixing passage; and the gas-liquid mixing passage is located below the liquid passage.

The outlet of the gas-liquid mixing passage is configured such that, at the outer side of the outlet end face, bubbles of said at least one type of gas injected out by the gas-liquid mixing passage, when floating up, pass through a stream containing the at least one type of liquid injected out from the passage outlet.

Furthermore, points of connection of the bypass passage to the converging section and the gas-liquid mixing cavity are located above a central axial plane of the liquid passage that is parallel to a horizontal plane; the number of bypass passages is greater than or equal to 1, and the bypass passages are arranged symmetrically with respect to a central axial plane of the liquid passage that is perpendicular to the horizontal plane; the bypass passage is smoothly connected to the converging section.

Furthermore, an external liquid source and a liquid supply pipeline that is connected to the external liquid source are provided, the liquid supply pipeline being fitted at the liquid inlet of the liquid passage, and a flow speed of liquid is not exceeding 5 m/s at the liquid inlet and between 5 m/s - 25 m/s at the passage outlet; a flow rate of liquid is 10 - 100 m³/h, and a pressure of liquid at the liquid inlet is 0.2 - 3.0 barg.

Furthermore, an external gas source and a gas supply pipeline that is connected to the external gas source are provided, the gas supply pipeline being fitted at the gas inlet, and a pressure of gas in the gas supply pipeline is 1.5 - 15 barg, and a flow rate of gas is 0.2 - 20 kg/h.

Furthermore, gas flows through an opening with a diameter of 0.5 - 2.5 mm into the gas-liquid mixing cavity (05), and the speed of gas when entering the gas-liquid mixing cavity is close to or the same as the speed of sound; the opening is disposed on an end of the gas supply pipeline that contacts the gas-liquid mixing cavity.

A flow of liquid that enters the gas-liquid mixing cavity is 2% - 20% of a total flow of liquid that enters the gas-liquid injection apparatus; a ratio of injected liquid to gas is such that every 1.0 - 30 m³ of liquid corresponds to 1 kg of gas; the liquid includes water, and the gas includes oxygen gas.

In a further aspect, an outlet of the gas-liquid mixing passage is arranged on the throat section of the first liquid passage; the shortest distance between the outlet of the gas-liquid mixing passage and the outlet end face is not greater than 5 - 25 mm.

In a further aspect, the outlet of the gas-liquid mixing passage is arranged on the outlet end face of the body; the shortest distance on the outlet end face between the outlet of the gas-liquid mixing passage and the passage outlet is 5 - 25 mm.

In another aspect, the present invention further discloses a method that uses 3D printing to prepare the above-mentioned gas-liquid injection apparatus, the materials for 3D printing including ABS, PLA, nylon and ASA.

Compared with the prior art, the technical solution provided in the present invention has the following advantages:
1. Pressurised gas and liquid mix in the gas-liquid mixing cavity to generate minute bubbles, and after the minute bubbles are injected into a liquid environment, such as a sewage treatment tank or pool, the contact area between gas and liquid is enlarged.
2. Minute bubbles at the injection apparatus outlet, when floating up, must pass through a high-speed liquid stream injected out from the passage outlet, which cuts the bubbles into smaller bubbles, further increasing gas-liquid contact time; secondly, the routes and times of bubbles floating up are extended, that is the gas-liquid contact time is extended; these two factors jointly act to increase gas-liquid mass transfer efficiency.
3. The gas-liquid injection apparatus of the present invention may be made by 3D printing polymer materials, greatly reducing manufacturing and operation costs, and at the same time, assembly is easy, maintenance is convenient, and use is suited to various scenarios.

### Brief Description of the Drawings

A better understanding of the advantages and spirit of the present invention can be gained from the detailed description below and the accompanying drawings. Those skilled in the art will understand that the drawings and embodiments do not limit the present invention in any way. Identical reference labels in the drawings correspond to identical or equivalent components.
Fig. 1 is a side view sectional drawing of a gas-liquid injection apparatus in embodiment 1;
Fig. 2 is a side view sectional drawing of a gas-liquid injection apparatus in embodiment 2;
Fig. 3 is a sectional drawing of the gas-liquid injection apparatus in embodiment 1 or 2 taken along the direction AA;

in the drawings: 01 - body; 02 - liquid passage; 03 - bypass passage; 04 - gas inlet; 05 - gas-liquid mixing cavity; 06 - gas-liquid mixing passage; 07 - inlet end face; 08 - outlet end face; 09 - liquid inlet; 10 - passage outlet; 11 - converging section; 12 - throat section; 13a, 13b - outlet of gas-liquid mixing passage; 14 - liquid supply pipeline; 15 - gas supply pipeline; 16 - opening.

### Detailed Description of the Invention

To clarify the object, technical solutions and advantages of the present invention, the technical solutions of the present invention will be clearly and thoroughly described below in conjunction with the accompanying drawings.

Obviously, the described embodiments are some of the embodiments of the present invention, rather than all of the embodiments. All other embodiments obtained by those skilled in the art on the basis of embodiments of the present invention without any inventive effort are included in the scope of protection of the present invention.

In the description of the present invention, it must be explained that unless otherwise explicitly specified and defined, the terms "fit" and "connect" refer to causing two or more portions to form a component that seals a fluid such as a liquid or gas. The means of fitting and connecting include a welding connection, flange connection, bolt connection, adhesion or being integrally formed, etc., and preferably a means of adhesion or being integrally formed is used. The terms "mutually connected" and "in communication" refer to states, formed between two or more portions, in which a fluid such as a liquid or gas may flow.

The terms "upstream" and "downstream" are relative to a direction of flow of liquid or gas. A process of liquid or gas flowing from an inlet toward an outlet is a process of flowing from upstream to downstream.

Terms that express orientation, such as "below", "above", "parallel to a horizontal plane" and "perpendicular to a horizontal plane", all correspond to orientations in a scenario in which the gas-liquid injection apparatus of the present invention is in normal operation.

In addition, qualifiers similar to "a" appearing herein do not indicate a limitation of quantity, but describe a technical feature that has not appeared in the preceding text. Similarly, unless modified by a specific quantity measure word, nouns herein should be regarded as including both singular and plural forms, i.e. the technical solution may include a single technical feature concerned, but may also include a plurality of the technical features.

It should be understood that in the present invention, "at least one (item)" means one or more, and "multiple" means two or more. The expression "and/or" is used to describe the associative relationship between associated objects, and indicates that three relationships may exist.

For example, "A and/or B" can mean three situations: A alone is present, B alone is present, or A and B are both present, wherein A and B may be singular or plural. The symbol "/" generally indicates an "or" relationship between the associated objects. "At least one of the following items (pieces)" or a similar expression means any combination of these items, including a single item (piece) or any combination of multiple items (pieces). For example, at least one (item) of a, b or c can mean: a, b, c, "a and b", "a and c", "b and c", or "a and b and c", wherein a, b and c may be single or multiple.

During use, the gas-liquid injection apparatus of the present invention is completely submerged in a liquid state environment. The apparatus comprises a body, and a hollow cavity in the body forms a liquid passage, a bypass passage, a gas inlet, a gas-liquid mixing cavity and a gas-liquid mixing passage. The body comprises two opposite end faces, which are respectively an inlet end face and an outlet end face. The two end faces are not located on the same plane. Opposite positions of the two end faces include approximately parallel to each other or form an angle, for example. The liquid passage is used for conveying liquid to be injected from the inlet end face to the outlet end face, and is formed, from upstream to downstream, by a liquid inlet that opens onto the inlet end face, a converging section, a throat section and a passage outlet that is located on the outlet end face.

Preferably, the liquid inlet extends into the body by a certain distance. The converging section is a section of passage that allows fluid to flow through and that has a passage cross-sectional area which gradually and smoothly reduces in a fluid flowing direction, and for example may be a frustum-shaped narrow passage. The throat section is a section of passage that has a passage cross-sectional area which does not change, and for example may be a straight round narrow passage.

The cross-sectional area of the throat section does not exceed the cross-sectional area of the converging section, and for example is equal to the smallest cross-sectional area of the converging section.

When liquid flows through the converging section, on the basis of the Venturi phenomenon, as the diameter of a narrow passage reduces, for example, the flow speed of the liquid stream increases, and the pressure decreases; the converging section may be seen as a portion of a circular cone. The cone angle of the circular cone is 2.0 - 5.0 degrees. When liquid flows through the throat section, since the passage diameter does not change, the liquid maintains a maximum flow speed and a minimum pressure, and injects out from the passage outlet. The flow speed of liquid is not greater than 5 m/s at the liquid inlet, and is between 5 - 25 m/s at the passage outlet.

A gas-liquid mixing cavity is arranged around the liquid passage. The gas-liquid mixing cavity is preferably annular, and is connected to the liquid passage by means of the bypass passage. The position of connection of the bypass passage to the liquid passage is located at the converging section of the liquid passage. The number of bypass passages is greater than or equal to one, preferably three.

When the gas-liquid injection apparatus is in normal operation, a central axis of the liquid passage is approximately parallel to a horizontal plane; a plane where the central axis is located is defined as a central axial plane, wherein a plane that is parallel to the horizontal plane is a central axial plane of the liquid passage that is parallel to the horizontal plane, and a plane that is perpendicular to the horizontal plane is a central axial plane of the liquid passage that is perpendicular to the horizontal plane.

The positions of connection of the respective bypass passage to the liquid passage and the gas-liquid mixing cavity are all located above the central axial plane of the liquid passage that is parallel to the horizontal plane, and inner surfaces of pipelines and connectors are all smooth. Here "smooth" means there are no surface defects such as protrusions or coarseness. The respective bypass passage is preferably a straight narrow passage with a constant diameter. Such a design may prevent solid impurities entrained in a liquid stream from flowing into the bypass passage, or being deposited near the inner surfaces and connectors, under the effect of gravity.

The bypass passages are arranged symmetrically along the central axial plane that is perpendicular to the horizontal plane.

For example, when there are three bypass passages, one is located on the central axial plane that is perpendicular to the horizontal plane, and the other two are arranged at each side of the central axial plane.

As described above, the gas-liquid mixing cavity preferably surrounds the periphery of the liquid passage. With the central axial plane of the liquid passage that is parallel to the horizontal plane taken as a boundary; above said central axial plane, the gas-liquid mixing cavity is connected to the bypass passage, and below said central axial plane, preferably directly below the liquid passage, two opposite ends of the gas-liquid mixing cavity are respectively connected to the gas inlet and the gas-liquid mixing passage.

An open end of the gas inlet is located below the liquid inlet on the inlet end face, preferably directly below the liquid inlet. The gas-liquid mixing passage is always located below the liquid passage when extending inside the body, preferably directly below. The gas-liquid mixing passage is optionally a narrow passage with a constant diameter.

An external liquid supply pipeline and gas supply pipeline are respectively inserted into the liquid inlet and gas inlet which take the form of narrow passages, and fitted together, to realise a function of conveying high-pressure liquid and gas from an external liquid source and an external gas source into the gas-liquid injection apparatus. Any means that forms a sealed connection may be chosen for the fitting, comprising welding, a flange connection or glueing, etc. When the material of one of the body, liquid supply and gas supply pipelines is a polymer, the fitting is preferably done by adhesion. "High pressure" refers to pressures of liquid and gas that are higher than atmospheric pressure. A pressure of liquid at the liquid inlet is between 0.2 - 3.0 barg, and a pressure of gas at the gas inlet is between 1.5 - 15 barg.

After liquid has flowed into the converging section of the liquid passage via the liquid supply pipeline, approximately 2% - 20% of a total flow of liquid flows along the bypass passage into the gas-liquid mixing cavity, and, in the cavity, mixes with gas that has flowed in via the gas supply pipeline. A flow rate of liquid is 10 - 100 m³/h, and a flow rate of gas is 0.2 - 20 kg/h.

To promote the mixing of the gas and liquid here, normally the gas supply pipeline directly contacts the gas-liquid mixing cavity, and an opening with a diameter of 0.5 - 2.5 mm is arranged at a contact end of the gas supply pipeline. When gas enters the gas-liquid mixing cavity through this small hole, choked flow is formed, and the gas flow speed increases to close or equal to the speed of sound; "close to" means within 20 m/s less than the speed of sound, which normally may be called subsonic speed.

The gas stream impacts liquid in the mixing cavity, generating a shearing force which causes large bubbles to break apart, and the minute bubbles mix more evenly with the liquid. After mixing, the gas and liquid flow along the gas-liquid mixing passage toward the outlet end.

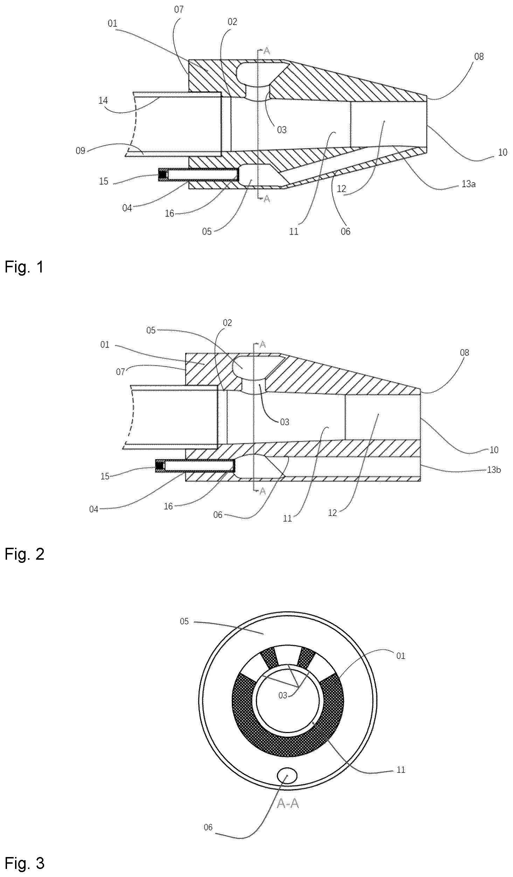

Fig. 1 is a sectional drawing taken along a central axial plane of the liquid passage that is perpendicular to the horizontal plane of the gas-liquid injection apparatus in embodiment 1.

The body 01 has an inlet end face 07 and an outlet end face 08 that are parallel to each other. The liquid passage 02 runs through the body 01, and is formed by a liquid inlet 09 that opens onto the inlet end face 07, a converging section 11, a throat section 12 and a passage outlet 10 that opens onto the outlet end face 08. A liquid supply pipeline 14 extends into the interior of the liquid inlet 09 by a certain distance; when one or both of the liquid supply pipeline 14 or body 01 are a material such as a polymer or rubber, a suitable glue is used to adhere the two together. An upper half of the converging section 11 of the liquid passage 02 is provided with several round holes, and a smooth connection to the bypass passage 03 is achieved through these round holes. The other end of the bypass passage 03 is connected to the gas-liquid mixing cavity 05 that surrounds the periphery of the liquid passage.

Accordingly, the bypass passage 03 allows some of the liquid flowing in the liquid passage 02 to bypass to the gas-liquid mixing cavity 05. The gas inlet 04 opens onto the inlet end face 07, and is located below the liquid inlet 09. A portion of the gas-liquid mixing cavity 05 that is located below the liquid passage 02 is respectively connected to the gas inlet 04 and the gas-liquid mixing passage 06 in opposite directions. In otherwords, the gas-liquid mixing cavity 05 and the gas-liquid mixing passage 06 are arranged in sequence downstream of the gas inlet 04.

Accordingly, gas flowing in via the gas inlet 04 enters the gas-liquid mixing cavity 05 and mixes with liquid that enters the gas-liquid mixing cavity 05 via the bypass passage 03, forming a gas-liquid mixed stream. The gas-liquid mixed stream then flows out of the gas-liquid mixing passage 06, for example in Fig. 1, flowing from the gas-liquid mixing passage 06 to the throat section 12 of the liquid passage 02, and finally flows out to an external liquid state environment. An opening of the gas inlet 04 is on the inlet end face 07, preferably located below the liquid inlet 09, and has a certain depth of extension into the body 01. The gas supply pipeline 15 extends into the interior of the gas inlet 04.

The gas inlet 04 may be constructed to form a small hole with a diameter in a range of 0.5 - 2.5 mm at a position of contact with the gas-liquid mixing cavity 05, and gas input by the gas supply pipeline 15 is injected into the gas-liquid mixing cavity 05 via the small hole.

Alternatively, the gas inlet 04 has an unchanged diameter at the place of contact with the gas-liquid mixing cavity 05, and a small hole 16 with a diameter in a range of 0.5 - 2.5 mm is constructed on an end face of the gas supply pipeline 15 that extends to the bottom of the gas inlet 04 and directly contacts the gas-liquid mixing cavity 05, achieving an object of accelerating a gas stream.

The gas-liquid mixing passage 06 that is located downstream of the gas-liquid mixing cavity 05 extends slanting upward and is connected to the liquid passage 02 at the throat section 12. The arrangement of the throat section 12 ensures that, at the connection position of the two, a pressure of fluid (also called "an unmixed stream") inside the liquid passage 02 is less than a pressure of fluid (also called "a gas-liquid mixed stream") inside the gas-liquid mixing passage 06, and flow speeds of the two streams are about the same. An outlet 13a of the gas-liquid mixing passage 06 on the liquid passage 02 may be elliptical, and preferably a minimum distance between the outlet 13a and the outlet end face 08 is not greater than 5 - 25 mm. The gas-liquid mixed stream flowing into the liquid passage 02 is distributed and flows along a bottom surface of the liquid passage 02, and, at an inner side of the outlet end face 08, does not fully mix with the unmixed stream from the liquid passage 02. The "inner side" of the outlet end face refers to a side that faces the body 01 of the injection apparatus, and the "outer side" refers to a side that faces the liquid state environment in which the injection apparatus is installed.

After the unmixed stream and the gas-liquid mixed stream inject into the liquid environment, at the outer side of the outlet end face, the gas-liquid mixed stream is at least partially covered below the unmixed stream, and when bubbles of gas mixed therein float up in the liquid state environment, the bubbles must pass through the covering unmixed stream above that is injected out from the passage outlet 10; that is, the bubbles are obstructed by the unmixed stream, therefore extending the residence times and routes thereof in the liquid state environment, promoting gas-liquid mass transfer, such that gas depleted in the liquid state environment is effectively replenished.

At the same time, energy brought by the stream injection agitates the liquid state environment, increasing circulation of liquid, such that gas is distributed more quickly and evenly.

As a reference, the length of the liquid inlet is about 50 mm, and an inner diameter of the liquid inlet pipeline is DN25 - DN100; the length of the converging section is 75 - 150 mm, and the cone angle is 2 - 5 degrees; the length of the throat section is 50 - 100 mm, and an inner diameter is 15 - 75 mm; the diameter of the bypass passage is 10 - 25 mm, and the diameter of the gas-liquid mixing passage is 10 - 25 mm; and the length of the body is 175 - 300 mm, and the width of the body is 50 - 200 mm.

Fig. 2 is a sectional drawing taken along a central axial plane of the liquid passage that is perpendicular to the horizontal plane of the gas-liquid injection apparatus in embodiment 2. The differences between Fig. 2 and Fig. 1 lie in the arrangement of the gas-liquid mixing passage 06 and the position of the outlet 13b thereof. The gas-liquid mixing passage 06 is no longer connected to the liquid passage 02, and the outlet 13b of the gas-liquid mixing passage 06 is directly positioned on the outlet end face 08, directly below the passage outlet 10 of the liquid passage 02.

Preferably, a minimum distance between the outlet 13b of the gas-liquid mixing passage 06 and the passage outlet 10 is 5 - 25 mm. In an operating state, at the outer side of the outlet end face, the gas-liquid mixed stream is completely covered by the unmixed stream, and when gas mixed therein floats up in the liquid state environment, the gas must pass through the covering unmixed stream above that is injected out from the passage outlet; that is, the gas is obstructed by the unmixed stream, therefore extending the residence time and route thereof in the liquid state environment, promoting gas-liquid mass transfer, such that gas depleted in the liquid state environment is effectively replenished. At the same time, energy brought by the stream injection agitates the liquid state environment, such that gas is distributed more quickly and evenly.

Taking sewage treatment as an example, the injected stream generates oxygen gas and promotes effective contact thereof with water, and in a situation where oxygen gas constantly depletes under the effect of biological oxidation, oxygen gas is supplied so as to maintain a certain dissolved oxygen concentration in water; besides supplying oxygen, a sufficient stirring mixing effect is generated in a tank region, promoting circulation of water, such that activated sludge sufficiently contacts and mixes with wastewater; and a certain moving speed of mixed liquid is maintained, such that the activated sludge always maintains a suspended state in the mixed liquid.

Fig. 3 is a sectional drawing taken along the liquid passage in the direction AA of the gas-liquid injection apparatus of Fig. 1 or 2, wherein 01 is the body of the injection apparatus, 11 is the converging section of the liquid passage, and 03 is 3 bypass passages, and they are connected to the liquid passage and the peripheral gas-liquid mixing cavity 05.

Positions of connection of the bypass passages to the liquid passage and the gas-liquid mixing cavity are located on a central axial plane of the liquid passage that is parallel to a horizontal plane, and the 3 bypass passages are arranged symmetrically with respect to a central axial plane of the liquid passage that is perpendicular to the horizontal plane. The central axes of the 3 bypass passages may all extend in radial directions of the liquid passage. 06 represents a gas-liquid mixing passage, and is located directly below the liquid passage.

In summary, in the gas-liquid injection apparatus, the outlets 13a and 13b of the gas-liquid mixing passage are both configured such that, at the outer side of the outlet end face 08, bubbles formed by gas injected out by the gas-liquid mixing passage 06, when floating up, pass through a liquid-containing stream injected out from the passage outlet 10.

Liquid injected by the gas-liquid injection apparatus includes water, a liquid reactant or another liquid with the same composition as the liquid state environment, and the gas includes oxygen gas or another reactive gas. The materials that form the gas-liquid injection apparatus are not reactive with respect to the injected liquid and gas, and are safe and not deformable.

The gas-liquid injection apparatus may be formed by assembling various components, and for example welded, in which case the body 01 is not needed. Particularly suitable, the gas-liquid injection apparatus may be formed as a whole by 3D printing. The materials used for 3D printing include resin materials such as ABS (acrylonitrile butadiene styrene copolymer), PLA (polylactic acid), nylon (polyamide fibre) and ASA (acrylonitrile-styrene-acrylic rubber terpolymer).

Use of 3D printing may greatly reduce manufacturing and assembly costs, reduce manufacturing time, and allow easier modification according to customer requirements, so that the gas-liquid injection apparatus of the present invention has more widespread application.

Taking sewage treatment as an example, Table 1 lists aeration effects using the gas-liquid injection apparatus of embodiment 1 under three different operating conditions:

| | Experiment 1 | Experiment 2 | Experiment 3 |
|---|---|---|---|
| Water flow rate (m³/h) | 50 | 50 | 50 |
| Pump pressure (barg) | 0.8 | 0.8 | 0.8 |
| Generator power (kW) | 2.2 | 2.2 | 2.2 |
| Water depth (m) | 5 | 5 | 2 |
| Oxygen gas flow rate (kg/h) | -1.5 | ~3 | ~3 |
| Oxygen gas pressure (barg) | 2.3 | 2.3 | 2.3 |
| SOTR (kg/h) | 0.82 | 1.51 | 1.37 |
| SAE (kgO₂/kW) | 0.37 | 0.68 | 0.63 |

The three experiments were all performed in a sewage tank, and identical parameters of the three comprise: initial flow rate of water stream input to the liquid passage by the liquid supply pipeline: 50 m³/h; water pump pressure: 0.8 barg; generator power: 2.2 kW; and oxygen gas pressure: 2.3 barg. Different parameters comprise the depth at which the injection apparatus is placed in the water and flow rate of oxygen gas. The effects of aeration are represented by SOTR and SAE in a standard state.

The "standard state" refers to 20°C, 1 atmosphere and water with 0 oxygen content. A person skilled in the art knows formulas and methods for converting actual measured numerical values into standard state values.

"SOTR" (standard oxygen transfer rate, kg/h) refers to an amount of oxygen gas (kg) dissolved in water every hour in the standard state; "SAE" (standard aeration efficiency, kgO₂/kW) refers to oxygen gas that can be dissolved in water for every kilowatt of energy consumed in the standard state.

The greater these two numerical values, the better the aeration effect. When the other parameters are all the same, when the injection apparatus is 5 metres deep in the water (Experiment 2), compared with 2 metres deep in the water (Experiment 3), the time and route for the oxygen gas bubbles to reach the water surface is extended; therefore, the dissolution is more complete, and the SOTR and SAE numerical values are also larger.

However, since the apparatus of the present invention can sufficiently and effectively disperse oxygen gas bubbles in a water solution, the effect of the distance between the apparatus and the liquid surface on aeration effects is not very significant, and is greatly less than theoretical values differing by 2.5 times.

In comparison, when other parameters are held constant, for example the injection apparatus is installed 5 metres deep in the water in each case, and oxygen gas flow rate is varied, comparing Experiment 2 (3.0 kg/h) with Experiment 1 (1.5 kg/h), SOTR and SAE differ by almost double, indicating that within the flow rate range in the experiment, the injection apparatus of the present invention can almost completely disperse oxygen gas injected into the water and dissolve the oxygen gas in the water.

Compared with a gas-liquid injection apparatus in the prior art with a more complicated structure and higher cost, such as Ventoxal^{™} produced by Air Liquide, the apparatus of the present invention has about the same aeration effect.

The embodiments described herein are merely preferred specific embodiments of the present invention, which are only intended to explain the technical solution of the present invention without limiting the present invention. Unless clearly indicated otherwise, each aspect or embodiment defined herein may be combined with any other aspect(s) or embodiment(s).

In particular, any preferred or advantageous feature indicated can be combined with any other preferred or advantageous feature indicated. All technical solutions obtainable by those skilled in the art according to the concept of the present invention by logical analysis, reasoning or limited experiment should be included in the scope of the present invention.

## Claims

1. Gas-liquid injection apparatus, used for injecting at least one type of gas and at least one type of liquid into a liquid state environment, **characterized in that**: the apparatus comprises a body (01), the body (01) being internally provided with a liquid passage (02), a bypass passage (03), a gas inlet (04), a gas-liquid mixing cavity (05) and a gas-liquid mixing passage (06), wherein:
the body (01) comprising an inlet end face (07) and an outlet end face (08) that are opposite each other, the liquid passage (02) comprising a liquid inlet (09) that opens onto the inlet end face (07) and a passage outlet (10) that is disposed on the outlet end face (08), further comprising a converging section (11) and a throat section (12) that are arranged in sequence downstream of the liquid inlet (09); one end of the bypass passage (03) opening to the converging section (11), and the other end being connected to the gas-liquid mixing cavity (05), the bypass passage (03) allowing liquid flowing in the liquid passage (02) to bypass to the gas-liquid mixing cavity (05); the gas-liquid mixing cavity (05) being located at the periphery of the liquid passage (02); the gas inlet (04) opeing onto the inlet end face (07), and being located below the liquid inlet (09); the gas-liquid mixing cavity (05) and the gas-liquid mixing passage (06) being arranged in sequence downstream of the gas inlet (04); gas flowing into the gas inlet (04) entering the gas-liquid mixing cavity (05) and mixing with liquid in the gas-liquid mixing cavity (05), forming a gas-liquid mixed stream,the gas-liquid mixed stream flowing out of the gas-liquid mixing passage (06); and the gas-liquid mixing passage (06) being located below the liquid passage (02).

2. Gas-liquid injection apparatus according to Claim 1, **characterized in that**:
points of connection of the bypass passage (03) to both the converging section (11) and the gas-liquid mixing cavity (05) are located above a central axial plane of the liquid passage (02) that is parallel to a horizontal plane; if the number of bypass passages (03) is greater than or equal to 1, the bypass passages are arranged symmetrically with respect to a central axial plane of the liquid passage (02) that is perpendicular to the horizontal plane.

3. Gas-liquid injection apparatus according to Claim 2, **characterized in that**: a flow of liquid that enters the gas-liquid mixing cavity (05) via the bypass passage (03) is 2% - 20% of a total flow of liquid that enters the gas-liquid injection apparatus.

4. Gas-liquid injection apparatus according to Claim 1, **characterized by**: further comprising an external liquid source and a liquid supply pipeline (14) that is connected to the external liquid source, the liquid supply pipeline (14) being fitted at the liquid inlet (09) of the liquid passage (02), and a flow speed of liquid is not exceeding 5 m/s at the liquid inlet (09) and between 5 m/s - 25 m/s at the outlet(10) of the liquid passage.

5. Gas-liquid injection apparatus according to Claim 4, **characterized in that**:
a flow rate of liquid is 10 - 100 m³/h, and a pressure of liquid at the liquid inlet (09) is 0.2 - 3.0 barg.

6. Gas-liquid injection apparatus according to Claim 1, **characterized by**: further comprising an external gas source and a gas supply pipeline (15) that is connected to the external gas source, the gas supply pipeline (15) being fitted at the gas inlet (04), and a pressure of gas in the gas supply pipeline (15) being 1.5 - 15 barg, and a flow rate of gas being 0.2 - 20 kg/h.

7. Gas-liquid injection apparatus according to Claim 6, **characterized in that**:
gas flows through an opening (16) with a diameter of 0.5 - 2.5 mm into the gas-liquid mixing cavity (05), and the speed of gas when entering the gas-liquid mixing cavity (05) is close to or the same as the speed of sound.

8. Gas-liquid injection apparatus according to Claim 7, **characterized in that**: the opening (16) is disposed on an end of the gas supply pipeline (15) that contacts the gas-liquid mixing cavity (05).

9. Gas-liquid injection apparatus according to Claim 1, **characterized in that**: a ratio of injected liquid to gas is such that every 1.0 - 30 m³ of liquid corresponds to 1 kg of gas.

10. Gas-liquid injection apparatus according to Claim 1, **characterized in that**:
an outlet (13a) of the gas-liquid mixing passage (06) is arranged on the throat section (12) of the liquid passage (02).

11. Gas-liquid injection apparatus according to Claim 10, **characterized in that**:
the shortest distance between the outlet (13a) of the gas-liquid mixing passage (06) and the outlet end face (08) is not greater than 5 - 25 mm.

12. Gas-liquid injection apparatus according to Claim 1, **characterized in that**:
an outlet (13b) of the gas-liquid mixing passage (06) is disposed on the outlet end face (08) of the body (01).

13. Gas-liquid injection apparatus according to Claim 12, **characterized in that**:
the shortest distance on the outlet end face (08) between the outlet (13b) of the gas-liquid mixing passage (06) and the passage outlet (10) is 5 - 25 mm.

14. Preparation method, used for preparing the gas-liquid injection apparatus according to any one of Claims 1 to 13, **characterized in that**: the gas-liquid injection apparatus is constructed through 3D printing.

15. Preparation method according to Claim 14, **characterized in that**: the materials used for 3D printing include ABS, PLA, nylon and ASA.
